Europäisches Patentamt

European Patent Office

Office européen des brevets

(19)

(11) Veröffentlichungsnummer: **0 173 805**
**B1**

(12) # EUROPÄISCHE PATENTSCHRIFT

(45) Veröffentlichungstag der Patentschrift:
**24.08.88**

(51) Int. Cl.⁴: **F 16 C 29/06**

(21) Anmeldenummer: **85107395.7**

(22) Anmeldetag: **14.06.85**

(54) Vorrichtung zur Linearführung, insbes. Geradführung.

(30) Priorität: **05.09.84 DE 3432535**

(43) Veröffentlichungstag der Anmeldung:
**12.03.86 Patentblatt 86/11**

(45) Bekanntmachung des Hinweises auf die Patenterteilung:
**24.08.88 Patentblatt 88/34**

(84) Benannte Vertragsstaaten:
**AT BE CH FR GB IT LI NL SE**

(56) Entgegenhaltungen:
**DE - B - 2 645 266**
**DE - B - 2 645 290**
**DE - C - 3 023 978**
**US - A - 2 343 575**

(73) Patentinhaber: **Franke & Heydrich KG, Obere Bahnstrasse 64, D-7080 Aalen/Würt. (DE)**

(72) Erfinder: **Grossmann, Siegfried, Platanenweg 33, D-7080 Aalen/Würt. (DE)**
Erfinder: **Staudt, Heinrich, Böhmerwaldstrasse 23, D-7080 Aalen/Würt. (DE)**

(74) Vertreter: **Fay, Hermann, Dipl.-Phys. Dr. et al, Dr. Hermann Fay Dr. Joachim Dziewior Ensingerstrasse 21 Postfach 17 67, D-7900 Ulm/Donau (DE)**

ACTORUM AG

## Beschreibung

Die Erfindung betrifft eine Vorrichtung zur Linearführung, insbesondere Geradführung, mit einem Paar parallel verlaufender Führungsteile und dazwischen eingelegten Wälzkörpern, die sich bei mindestens einem der Führungsteile an zwei parallelen Laufstäben abwälzen, die in je einem Laufstabbett der Fürhungsteils angeordnet sind, und mit die Laufstäbe in ihrem Laufstabbett haltenden Backen, die die Laufstäbe unter Freilassung einer Laufbahn für die Wälzkörper von der den Wälzkörpern abgewandten Seite her bis über die Stelle grösster Laufstabdicke umschliessen, wobei die am Laufstabbett innen, d.h. zwischen den Laufstäben liegenden Backen als elastisch nachgiebige Schenkel von quer zwischen den Laufstäben angeordneten Bügeln ausgebildet sind.

Bei einer aus der DE-B-2645290 bekannten Vorrichtung dieser Art bilden je eine aussen und eine innen liegende Backe gemeinsam eine Aufnahme für den Laufstab an einem Haltestück, das aus zwei elastischen Federbügeln besteht, nämlich dem Bügel mit den innen liegenden Backen und einem Bügel mit den aussen liegenden Backen, wobei beide Bügel am Bügelrücken untereinander und mit dem Führungsteil durch Schrauben, Nieten oder dergleichen fest verbunden sind. Bei langen Führungen können innerhalb dieser Aufnahmen zwei Laufstababschnitte aneinander stossen und die Backen können die Laufstababschnitte beidseits der Stossstelle übergreifen, so dass die Enden der Laufstababschnitte in der Aufnahme aufeinander ausgerichtet werden. – Ein Nachteil dieser bekannten Vorrichtung ist in der Notwendigkeit stets vollständige Aufnahmen für die Laufstäbe mit jeweils innerer und äusserer Backe bildender Haltestücke zu sehen, die nicht nur für sich selbst, sondern auch am Führungsteil einer Vormontage bedürfen, was umständlich und zeitaufwendig ist.

Der Erfindung liegt die Aufgabe zugrunde, eine Vorrichtung der eingangs genannten Art so auszubilden, dass Halteteile mit vollständigen Aufnahmen für die Laufstäbe entfallen und die Laufstabmontage insgesamt wesentlich vereinfacht wird.

Diese Aufgabe wird nach der Erfindung dadurch gelöst, dass die aussen liegenden Backen als am Führungsteil feste Randvorsprünge des jeweiligen Laufstabbettes ausgebildet und die Bügel als von den aussen liegenden Backen unabhängige Teile selbsthaltend zwischen den Laufstäben eingerastet sind.

Der durch die Erfindung erreichte Fortschritt besteht im wesentlichen darin, dass ausser den Bügeln selbst keine weiteren Halteteile zur Laufstabmontage erforderlich sind, und dass die Bügel keiner Vormontage am Führungsteil mehr bedürfen, sondern an jeder Stelle längs der Laufstäbe eingerastet werden können und dann sowohl die Laufstäbe als auch sich selbst halten, da sie die Laufstäbe gegenüber den am Führungsteil festen und unnachgiebigen aussenliegenden Backen und sich selbst gegenüber den Laufstäben verspannen.

Es empfiehlt sich, dass die Bügelschenkel den Laufstäben formschlüssig anliegende Schenkelteile aufweisen, damit die Bügel einen sicheren und genau bestimmten Rastsitz an den Laufstäben erhalten. Um das elastische Verhalten der Bügel bzw. Bügelschenkel in einfacher Weise den Erfordernissen anpassen zu können, liegen in weiterer Ausbildung der Erfindung die Bügel mit dem Bügelrücken in einer im Führungsteil zwischen den Laufstabbetten verlaufenden Längsnut, so dass für die Bügelschenkel eine immer ausreichende Bauhöhe zur Verfügung steht. Die Längsnut kann auch dazu dienen, die Bügel unabhängig von den Laufstäben am Führungsteil zu befestigen, indem die Längsnut an beiden Seitenwänden eine Hinterschneidung aufweist, in die der Rücken des Bügels mit seitlichen Profilvorsprüngen eingreift. Dann können die Bügel auch schon vor den Laufstäben am Führungsteil lediglich durch Einrasten in der Längsnut fixiert und später die Laufstäbe an den Bügelschenkeln eingerastet werden. Jedoch empfiehlt es sich in beiden Fällen, dass die Bügel in ihrer quer zu den Laufstäben gesehenen Bügelbreite elastisch auf mindestens den lichten Abstand zwischen den Laufstäben zusammendrückbar sind, so dass sie zwischen den in ihrem Laufstabbett liegenden Laufstäben hindurch eingesetzt oder entnommen werden können. Die Bügel können also auch nachträglich noch einzeln versetzt werden.

Weiter können bei der erfindungsgemässen Vorrichtung die Bügel ebenfalls dazu dienen, die Enden aneinanderstossender Laufbahnabschnitte aufeinander auszurichten, indem der Bügelschenkel den Stoss beidseits übergreift. Darüber hinaus entsteht durch die Erfindung auch die Möglichkeit, aneinander stossende Abschnitte des Führungsteiles selbst mit Hilfe der Bügel im Stoss aufeinander auszurichten und zumindest gegenseitig vorzuzentrieren. Dazu ist nach der Erfindung vorgesehen, dass der Bügelrücken als in der Längsnut sitzendes Passstück ausgebildet ist und am Passstück zwei Abschnitte des Führungsteils aneinanderstossen, die beidseits der Stossstelle vom Passstück ausrichtend übergriffen sind.

Vorzugsweise sind die aussen liegenden Backen als am Führungsteil angeformte Nasen oder entlang dem Laufstabbett durchlaufende Wulste ausgebildet. Besonders im letzteren Fall durchlaufender Wulste besteht die einfache Möglichkeit, das zumeist als Führungsschiene gestaltete Führungsteil schon mit den Wulsten im Strangzieh- oder Strangpressverfahren herzustellen.

Eine weitere sehr vorteilhafte Ausführungsform der Erfindung besteht darin, dass die Laufstäbe zur Ausrichtung bezüglich ihrer Drehlage um die Stablängsachse mit seitlichen Richtflächen versehen sind, welchen die aussen und/oder innen liegenden Backen formschlüssig anliegen. Im einzelnen können zweckmässig die Richtflächen von entlang dem Laufstab verlaufenden ebenen oder konkaven Aussparungen des Laufstabprofiles gebildet sein, in welche die Bügelschenkel mit entsprechend eben oder konvex ausgebildeten Schenkelteilen eingreifen. Die so beim Einrasten der Bügel stattfindende Laufstabausrichtung ist bei Laufstäben mit für die Wälzkörper angeschliffener Laufbahnfläche von Bedeutung, weil sie ohne weiteres die gegenüber den Wälzkörpern richtige Lage der Laufbahnfläche ergibt und dadurch das Einführen der Wälzkörperkette zwischen die Führungsteile wesentlich erleichtert. Die Richtflächen könen am Laufstab zusammen mit den Laufbahnflächen geschliffen werden.

Im folgenden wird die Erfindung an in der Zeichnung dargestellten Ausführungsbeispielen näher erläutert; es zeigen:

Fig. 1 einen Querschnitt durch eine Führungsvorrichtung nach der Erfindung in schematischer Darstellung,

Fig. 2 das in Fig. 1 mit II bezeichnete Detail in gegenüber Fig. 1 vergrösserter Darstellung, und

Fig. 3 bis 5 verschiedene Ausführungsbeispiele des Gegenstandes der Fig. 2.

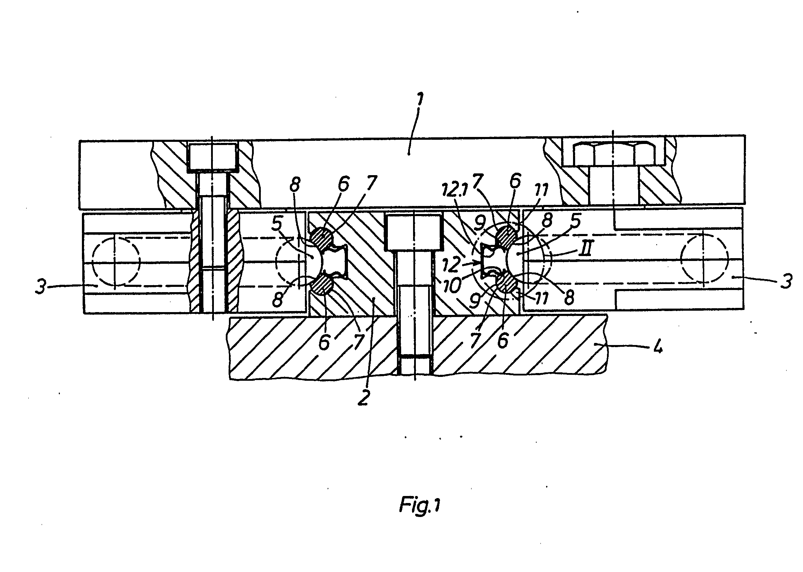

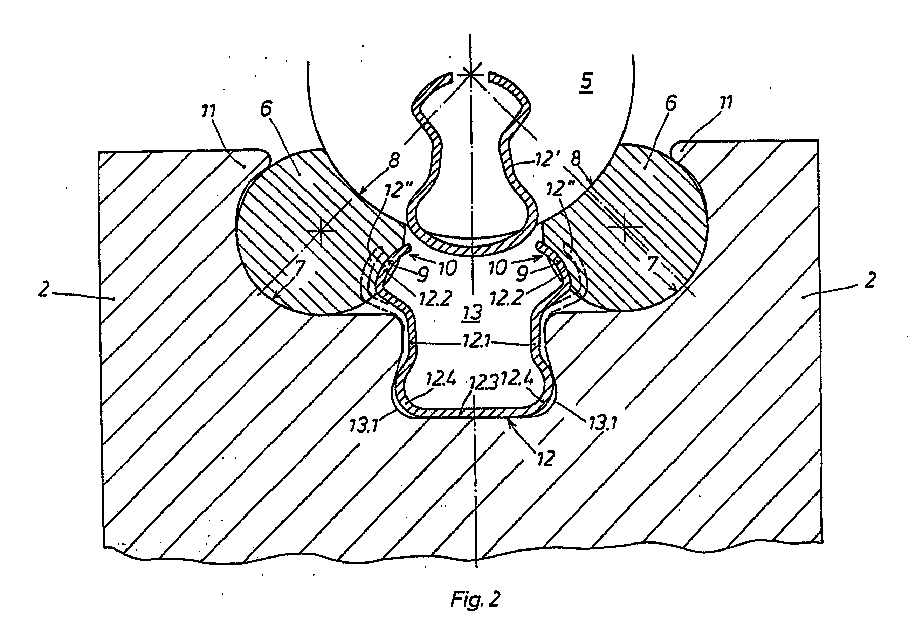

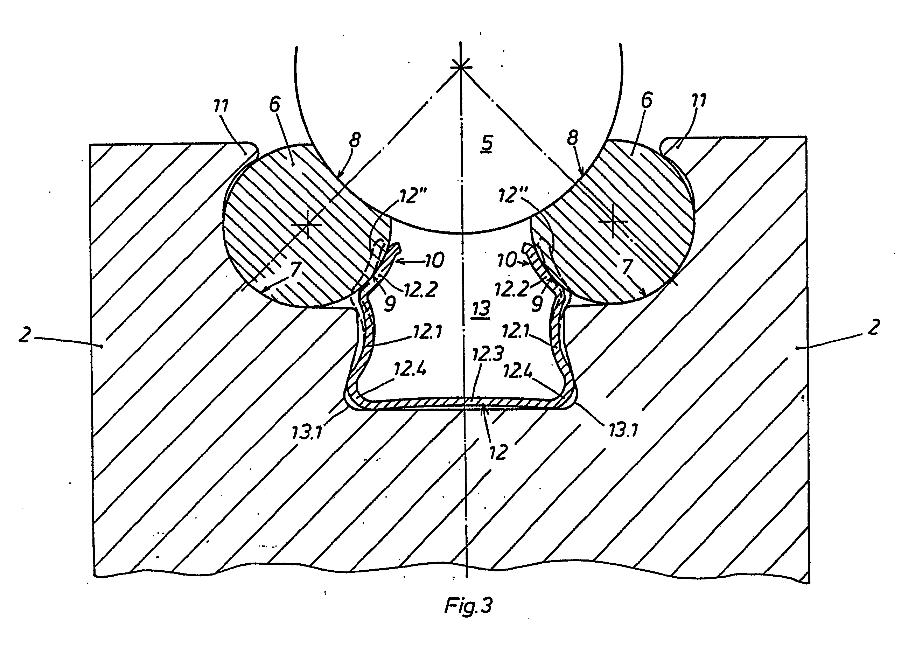

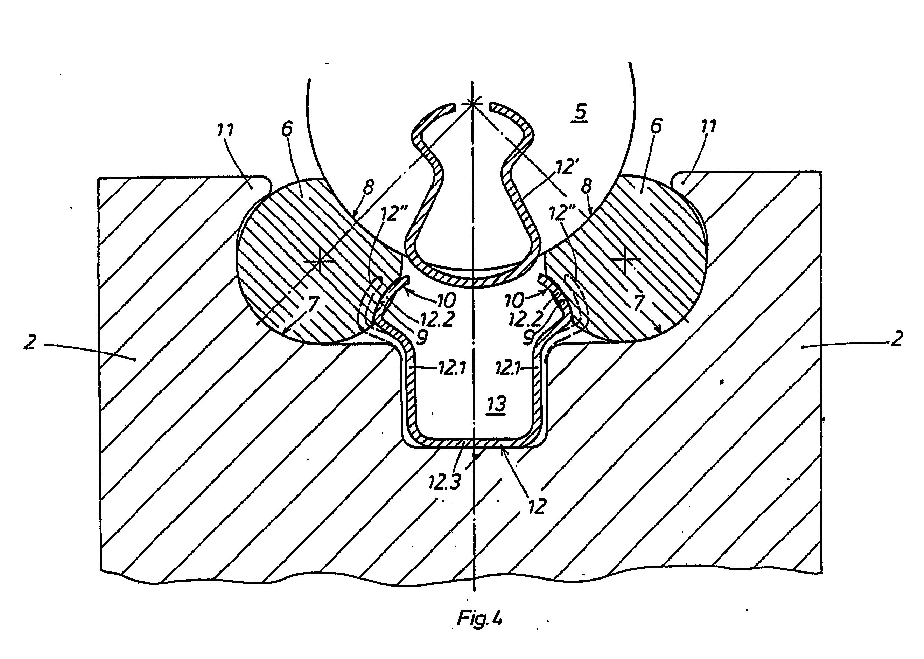

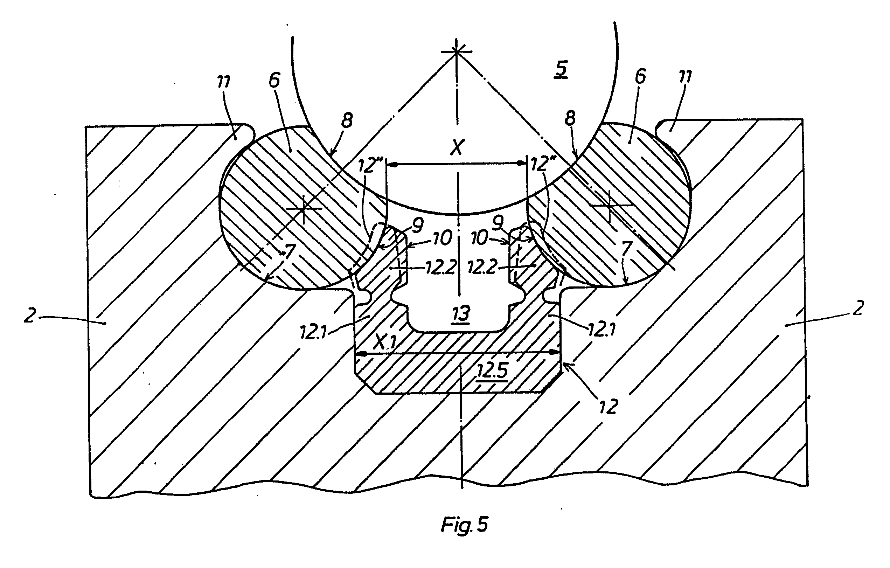

Die in Fig. 1 gezeigte Vorrichtung zur Geradführung einer Schlittenplatte 1 besitzt zwei Paar parallel laufender Führungsteile, nämlich jedes Paar aus einem als Profilführungsschiene ausgebildeten Führungsteil 2 und einem als Kugelumlaufelement ausgebildeten Führungsteil 3, wobei die Führungsteile 3 mit der Schlittenplatte 1, das Führungsteil 2 mit einem Maschinenbett 4 verbunden sind. Zwischen dem Führungsteil 2 und den Führungsteilen 3 sind jeweils Wälzkörperketten eingelegt, von welchen in der Zeichnung nur die Wälzkörper 5 ohne jeweils die Wälzkörperkäfige dargestellt sind. Die Wälzkörper 5 wälzen sich bei beiden Führungsteilen 2, 3 an jeweils zwei parallelen Laufstäben 6 ab, von welchen nur die des Führungsteils 2 dargestellt sind. Diese Laufstäbe 6 sind, wie auch die anderen Figuren zeigen, in je einem Laufstabbett 7 des Führungsteils 1 angeordnet und besitzen eine im wesentlichen kreisförmige Querschnittsform, abgesehen von Profilaussparungen, welche Laufbahnflächen 8 für die Wälzkörper 5 oder später noch im einzelnen zu behandelne Richtflächen 9 bilden. Die Laufstäbe 6 sind in ihrem Laufstabbett 7 von Backen 10, 11 gehalten, welche die Laufstäbe 6 unter Freilassung der Laufbahn für die Wälzkörper 5 von der den Wälzkörpern abgewandten Seite her bis über die Stelle grösster Laufstabdicke umschliessen. Die am Laufstabbett 7 innen, d. h. zwischen den Laufstäben 6 liegenden Backen 10 sind als elastisch nachgiebige Schenkel 12.1 von quer zwischen den Laufstäben 6 angeordneten Bügeln 12 ausgebildet. Die unverformte entspannte Gestalt der Bügel 12 ist jeweils gestrichelt bei 12″ angedeutet. Die aussen liegenden Backen 11 sind als am Führungsteil 2 feste Randvorsprünge des jeweiligen Laufstabbettes 7, nämlich in den Ausführungsbeispielen als am Führungsteil 2 angeformte, entlang dem Laufstabbett 7 durchlaufende Wulste ausgebildet. Die Bügel 12 sind als von den aussen liegenden Backen 11 unabhängige Teile selbsthaltend zwischen den Laufstäben 7 eingerastet. Die Bügelschenkel 12.1 besitzen den Laufstäben 6 formschlüssig anliegende Schenkelteile 12.2. Mit dem Bügelrücken 12.3 liegen die Bügel 12 in einer im Führungsteil 2 zwischen den Laufstabbetten 7 vorlaufenden Längsnut 13. In den Ausführungsbeispielen nach den Fig. 1, 2 und 3 ist die Längsnut 13 an beiden Seitenwänden mit einer etwa schwalbenschwanzartigen Hinterschneidung 13.1 versehen, in die der Rücken 12.3 des Bügels 12 mit seitlichen Profilvorsprüngen 12.4 eingreift, so dass der Bügel 12 nicht nur an den Laufstäben 6, sondern unabhängig davon auch in der Längsnut 13 fixiert ist, die Bügel 12 also auch schon ohne Laufstäbe 6 am Führungsteil 2 gesichert werden können. Im Ausführungsbeispiel nach den Fig. 4 und 5 ist auf eine solche Sicherung der Bügel 12 in der Längsnut 13 verzichtet. Weiter besteht die aus den Fig. 2 und 4 bei jeweils 12′ dargestellte Möglichkeit, den Bügel 12 in seiner quer zu den Laufstäben 6 gesehenen Bügelbreite elastisch auf mindestens den lichten Abstand zwischen den Laufstäben 6 zusammendrücken, so dass die Bügel 12 zwischen den in ihren Laufstabbetten 7 liegenden Laufstäben 6 hindurch in ihren Rastsitz eingesetzt, bzw. ihm entnommen werden können. Die Fig. 5 zeigt eine Ausführungsform, bei der der Bügelrücken als in der Längsnut 13 sitzendes Passstück 12.5 ausgebildet ist, so dass am Passstück 12.5 zwei Abschnitte des Führungsteils 2 aneinander stossen können, die beidseits der Stossstelle vom Passstück 12.5 ausrichtend und vorzentrierend übergriffen werden. Bei einem derartigen Bügel 12 muss allerdings auf die Möglichkeit, ihn entsprechend dem Beispiel nach den Fig. 2 und 3 zusammenzudrücken, verzichtet werden. Derartige mit Passstücken 12.5 versehene Bügel 12 in der Ausführungsform von Fig. 5 sind daher in der Längsnut 13 einzusetzen, bevor die Laufstäbe 6 in ihr jeweiliges Laufstabbett 7 eingelegt werden. Jedoch besteht ohne weiteres auch die Möglichkeit, die Längsnut 13 im Vergleich zu Fig. 5 schmaler auszubilden, so dass das in Fig. 5 mit X1 bezeichnete Mass des Passstückes 12.5 nicht breiter als der mit X bezeichnete lichte Abstand zwischen den Laufstäben 6 ist, so dass dann Bügel 12 mit einem Passstück 12.5 als Bügelrücken auch zwischen den Laufstäben 6 hindurch geführt werden können. Die Figuren 2 und 4 zeigen weiter den Fall, dass die Laufstäbe 6 zur Ausrichtung bezüglich ihrer Drehlage um die Stabslängsachse mit den schon erwähnten Richtflächen 9 versehen sind, welchen in den Ausführungsbeispielen die innen liegenden Backen 10 formschlüssig anliegen. Jedoch können derartige Richtflächen 9 auch für die aussen liegenden Backen 11 vorgesehen sein. In den Ausführungsbeispielen sind die Richtflächen 9 von entlang dem Laufstab 6 verlaufenden konkaven Aussparungen des Laufstabprofiles gebildet. In diese Aussparungen greifen die Bügelschenkel 12.1 mit entsprechend konvex ausgebildeten Schenkelteilen 12.2 formschlüssig ein, so dass die Bügel 12 im fertig eingerasteten Zustand die Drehlage der Laufstäbe 6 bereits fixieren, ehe die Wälzkörper 5 zwischen die Führungsteile 2, 3 eingeführt sind. — Die Längsnut 13 bildet zugleich den nötigen Freiraum für den Wälzkörperkäfig.

**Patentansprüche**

1. Vorrichtung zur Linearführung, insbesondere Geradführung mit einem Paar parallel laufender Führungsteile (2, 3) und dazwischen eingelegten Wälzkörpern (5), die sich bei mindestens einem der Führungsteile an zwei parallelen Laufstäben (6) abwälzen, die in je einem Laufstabbett (7) des Führungsteils (2) angeordnet sind, und mit die Laufstäbe (6) in ihrem Laufstabbett (7) haltenden Backen (10, 11), die die Laufstäbe (6) unter Freilassung einer Laufbahn für die Wälzkörper (5) von der den Wälzkörpern (5) abgewandten Seite her bis über die Stelle grösster Laufstabdicke umschliessen, wobei die am Laufstabbett (7) innen, d.h. zwischen den Laufstäben (6) liegenden Backen (10) als elastisch nachgiebige Schenkel (12.1) von quer zwischen den Laufstäben (6) angeordneten Bügeln (12) ausgebildet sind, dadurch gekennzeichnet, dass die aussen liegenden Backen (11) als am Führungsteil (2) feste Randvorsprünge des jeweiligen Laufstabbettes (7) ausgebildet und die Bügel (12) als von den aussen liegenden Backen (11) unabhängige Teile selbsthaltend zwischen den Laufstäben (6) eingerastet sind.

2. Vorrichtung nach Auswahl 1, dadurch gekennzeichnet, dass die Bügelschenkel (12.1) den Laufstäben (6) formschlüssig anliegende Schenkelteile (12.2) aufweisen.

3. Vorrichtung nach Anspruch 1 oder 2, dadurch gekennzeichnet, dass die Bügel (12) mit dem Bügelrücken (12.3) in einer im Führungsteil (2) zwischen den Laufstabbetten (7) verlaufenden Längsnut (13) liegen.

4. Vorrichtung nach -Anspruch 3, dadurch gekennzeichnet, dass die Längsnut (13) an beiden Seitenwänden eine Hinterschneidung (13.1) aufweist, in die der Rücken (12.3) des Bügels (12) mit seitlichen Profilvorsprüngen (12.4) eingreift.

5. Vorrichtung nach einem der Ansprüche 1 bis 4, dadurch gekennzeichnet, dass der Bügel (12) in seiner quer zu den Laufstäben (6) gesehenen Bügelbreite elastisch auf mindestens den lichten Abstand zwischen den Laufstäben (6) zusammendrückbar ist.

6. Vorrichtung nach Anspruch 3, dadurch gekennzeichnet, dass der Bügelrücken (12.3) als in der Längsnut (13) sitzendes Passstück (12.5) ausgebildet ist und am Passstück (12.5) zwei Abschnitte des Führungsteils (2) aneinander stossen, die beidseits der Stossstelle vom Passstück (12.5) ausreichend übergriffen sind.

7. Vorrichtung nach einem der Ansprüche 1 bis 6, dadurch gekennzeichnet, dass die aussen liegenden Backen (11) als am Führungsteil (2) angeformte Nasen oder entlang dem Laufstabbett (7) durchlaufende Wulste ausgebildet sind.

8. Vorrichtung nach einem der Ansprüche 1 bis 7, dadurch gekennzeichnet, dass die Laufstäbe (6) zur Ausrichtung bezüglich ihrer Drehlage um die Stablängsachse mit Richtflächen (9) versehen sind, welchen die aussen und/oder innen liegenden Backen (10) formschlüssig anliegen.

9. Vorrichtung nach Anspruch 8, dadurch gekennzeichnet, dass die Richtflächen (9) von entlang dem Laufstab (6) verlaufenden ebenen oder konkaven Aussparungen des Laufstabprofiles gebildet sind, in welche die Bügelschenkel (12.1) mit entsprechend eben oder konkav ausgebildeten Schenkelteilen (12.2) eingreifen.

**Claims**

1. Apparatus for linear guidance, in particular for guidance in a straight line, comprising a pair of guide portions (2, 3) which extend in parallel relationship and rolling members (5) which are fitted therebetween and which, in the case of at least one of the guide portions, roll against two parallel running bars (6) which are each arranged in a respective running bar bed (7) in the guide portion (2), and jaws (10, 11) which hold the running bars (6) in their respective running. bar bed (7) and which embrace the running bars (6) from the side remote from the rolling members (5), to beyond the location of the greatest running bar thickness, leaving a track for the rolling members (5), wherein the jaws (10) which lie against the running bar bed (7) inwardly, that is to say between the running bars (6), are in the form of resiliently yielding limbs (12.1) of stirrup members (12) which are arranged transversely between the running bars (6), characterised in that the outwardly disposed jaws (11) are in the form of edge projections of the respective running bar bed (7), said edge projections being fixed on the guide portion (2), and the stirrup members (12), as members which are independent of the outwardly disposed jaws (11), are latched selfholdingly in position between the running bars (6).

2. Apparatus according to claim 1 characterised in that the limbs (12.1) of the stirrup members have limb portions (12.2) which bear positively against the running bars (6).

3. Apparatus according to claim 1 or claim 2 characterised in that the stirrup members (12) lie with the back portion (12.3) in a longitudinal groove (13) extending in the guide portion (2) between the running bar beds (7).

4. Apparatus according to claim 3 characterised in that the longitudinal groove (13) has an undercut (13.1) at both side walls, the back portion (12.3) of the stirrup member (12) engaging into the undercuts with lateral profile projections (12.4).

5. Apparatus according to one of claims 1 to 4 characterised in that in its width as considered transversely with respect to the running bars (6) the stirrup member (12) can be resiliently compressed to at least the internal spacing between the running bars (6).

6. Apparatus according to claim 3 characterised in that the back portion (12.3) of the stirrup member is in the form of a fitting portion (12.5) which is seated in the longitudinal groove (13) and at the fitting portion (12.5) two parts of the guide portion (2) but against each other, the fitting portion (12.5) engaging over said parts of the guide portion on both sides of the butt join, for alignment thereof.

7. Apparatus according to one of claims 1 to 6 characterised in that the outwardly diposed jaws (11) are in the form of projections formed on the guide portion (2) or beads extending along the running bar bed (7).

8. Apparatus according to one of claims 1 to 7 characterised in that for the purposes of alignment in respect of their rotational position about the longitudinal axis of the bars the running bars (6) are provided with aligning surfaces (9) against which the outwardly and/or inwardly disposed jaws (10) positively bear.

9. Apparatus according to claim 8 characterised in that the aligning surfaces (9) are formed by flat or concave recesses in the running bar profile, the recesses extending along the running bar (6) and the limbs (12.1) of the stirrup member engaging into said recesses with limb portions (12.2) of a correspondingly flat or convex configuration.


**Revendications**

1. Dispositif de guidage linéaire, notamment de guidage rectiligne, comportant un couple d'organes de guidage (2, 3) parallèles et des corps roulants (5), qui sont installés entre les organes de guidage et roulent, dans le cas d'au moins l'un des organes de guidage, contre deux barres parallèles de circulation (6) qui sont disposées chacune dans un logement (7), que comporte l'organe de guidage (2), et des mâchoires (10, 11), qui retiennent les barres de circulation (6) dans leurs logements (7) et entourent les barres de circulation (6) tout en ménageant une piste de circulation pour les corps roulants (5), à partir du côté tourné à l'opposé des corps roulants (5) et ce jusqu'au-delà de la zone d'épaisseur maximale des barres de circulation, les mâchoires (10), qui sont situées sur le côté intérieur dans leurs logements (7), c'est-à-dire entre les barres de circulation (6), étant agencées sous la forme de branches (12.1), aptes à fléchir élastiquement, d'étriers (12) disposés transversalement entre les barres de curculation (6), caractérisé par le fait que les mâchoires extérieures (11) sont réalisées sous la forme d'appendices saillants marginaux, qui sont fixes sur l'organe de guidage (2), les logements respectifs (7) des barres de circulation, et que les étriers (12) sont insérés par encliquetage, d'une manière autobloquante entre les barres de circulation (6), sous la forme d'éléments indépendants des mâchoires extérieurs (11).

2. Dispositif selon la revendication 1, caractérisé en ce que les branches (12.1) des étriers comportent des éléments (12.2) s'appliquant selon une liaison par formes complémentaires contre les barres de circulation (6).

3. Dispositif selon la revendication 1 ou 2, caractérisé en ce que les étriers (12) s'appliquent par leurs bases (12.3) dans une rainure longitudinale (13) s'étendant dans l'organe de guidage (2) entre les logements (7) des barres de circulation.

4. Dispositif selon la revendication 3, caractérisé en ce que la rainure longitudinale (13) comporte, au niveau de ses deux parois latérales, une partie en dépouille (13.1), dans laquelle la base (12.3) de l'étrier (12) s'engage par des parties saillantes latérales profilées (12.4).

5. Dispositif selon l'une des revendications 1 à 4, caractérisé en ce qu'on peut réduire par compression élastique la largeur de l'étrier (12), comptée transversalement par rapport aux barres de circulation (6), pour la rendre au moins égale à l'écartement présent entre les barres de circulation (6).

6. Dispositif selon la revendication 3, caractérisé en ce que la base (12.3) de l'étrier est réalisée sous la forme d'un élément ajusté (12.5) placé dans la rainure longitudinale (13) et contre l'élément ajusté (12.5) viennent s'appliquer en aboutement deux sections de l'organe de guidage (2), au-dessus desquelles l'élément ajusté (12.5) déborde des deux côtés de la zone d'aboutement, et ce en réalisant un alignement.

7. Dispositif selon l'une des revendications 1 à 6, caractérisé en ce que les mâchoires extérieures (11) sont réalisées sous la forme de becs formés par façonnage sur l'organe de guidage (2) ou de rebords s'étendant le long du logement (7) des barres de circulation.

8. Dispositif selon l'une des revendications 1 à 7, caractérisé en ce que les barres de circulation (6) comportent, pour l'alignement concernant leur position en rotation autour de leur axe longitudinal, des surfaces directrices (9) contre lesquelles les mâchoires extérieures et/ou intérieures (10) s'appliquent selon une liaison par formes complémentaires.

9. Dispositif selon la revendication 8, caractérisé en ce que les surfaces directrices (9) sont formées par des évidements plats ou concaves du profil de la barre de circulation (6), qui s'étendent le long de la barre de circulation (6) et dans lesquels les branches (12.1) de l'étrier s'engagent par des parties (12.2) possédant une forme plane ou concave correspondante.

Fig.1

Fig. 2

Fig.3

Fig. 4

Fig. 5